# DEMANDE DE BREVET EUROPEEN

(11) **EP 4 795 989 A1**
(43) Date de publication de la demande: **26.08.2026**
(21) Numéro de dépôt: 26158597.0
(22) Date de dépôt: 13.02.2026
(51) Int. Cl.: A47J 37/06

(54) **PLAQUE DE CUISSON POUR PLANCHA FORMEE PAR EMBOUTISSAGE**

(30) Priorité: 21.02.2025 FR 2501838
(71) Demandeur: Krampouz, 29700 Pluguffan (FR)
(72) Inventeur: LE NAIR, Anthony, 29700 PLUGUFFAN (FR); COLIN, Fabrice, 29700 PLUGUFFAN (FR)
(74) Mandataire: SEB Développement

(57) **Abrégé**

Plaque de cuisson (1) pour plancha formée par emboutissage d'un corps monobloc en acier inoxydable, la plaque de cuisson (1) comprenant une zone de cuisson (10) s'étendant dans un plan, et une bordure (11) d'un seul tenant s'étendant du côté de la zone de cuisson (10) sur toute la périphérie de la zone de cuisson (10) selon une direction de protrusion sensiblement orthogonale au plan.

## Description

### DOMAINE TECHNIQUE

La présente divulgation se rapporte au domaine général des appareils de cuisson, et plus particulièrement aux plaques de cuisson pour appareils de cuisson de type plancha.

### ETAT DE LA TECHNIQUE

La tendance croissante à cuisiner à l'extérieur avec des équipements modernes et pratiques a encouragé le développement de solutions innovantes qui répondent aux besoins des professionnels de la restauration en matière de performance, d'hygiène et de sécurité. Notamment, l'appareil de cuisson de type « plancha » permet de saisir des aliments de façon homogène, les aliments étant en sustentation sur un plan de cuisson chauffé à la température adéquate.

Les plaques de cuisson traditionnelles sont généralement réalisées par moulage d'une plaque en fonte ou par pliage d'une plaque en acier laminé, en acier inoxydable ou en aluminium, et par soudure des angles.

Toutefois, dans le cas d'une plaque réalisée par pliage, les zones de pliage et de soudure de la plaque présentent des formes anguleuses qui sont difficilement accessibles et rendent le nettoyage de la plaque de cuisson fastidieux. Des bactéries peuvent se développer dans ces zones si des restes d'aliments ne sont pas correctement éliminés lors du nettoyage. Ainsi, les plaques de cuisson en acier inoxydable couramment disponibles sur le marché nécessitent un temps plus important de nettoyage en raison de leur forme induite par leur procédé de fabrication.

### EXPOSE DE L'INVENTION

Un but de la présente divulgation est de proposer une plaque de cuisson pour plancha pratique à utiliser, permettant une distribution de chaleur homogène, tout en garantissant un nettoyage facile de la plaque après utilisation.

Ce but est atteint par une plaque de cuisson pour plancha formée par emboutissage d'un corps monobloc en acier inoxydable, comprenant une zone de cuisson s'étendant dans un plan, et une bordure d'un seul tenant s'étendant du côté de la zone de cuisson sur toute la périphérie de la zone de cuisson selon une direction de protrusion sensiblement orthogonale au plan.

La plaque de cuisson selon l'invention est obtenue par emboutissage. L'absence de zone de pliage ou de soudure permet de faciliter le nettoyage de la plaque de cuisson après utilisation. La plaque formée par un corps monobloc permet une répartition homogène de la chaleur sur toute la plaque de cuisson, et en particulier dans la zone de cuisson. La formation de la plaque de cuisson par emboutissage permet d'obtenir une surface lisse et simple à nettoyer.

La présence de bordures s'étendant d'un côté de la plaque de cuisson, sur toute la périphérie de la zone de cuisson, rend plus pratique son utilisation, en permettant à la fois de saisir des viandes ou des poissons tout en faisant revenir d'autres aliments comme des légumes sur la zone de cuisson en réduisant le risque de chute d'aliments en dehors de la plaque. La présence de bordures réduit aussi le risque de projection de graisse en direction de l'utilisation et donc le risque de brûlure.

L'orifice traversant la zone de cuisson permet une évacuation simple des graisses excédentaires en cours d'utilisation, mais aussi une évacuation des eaux usées ou des produits dégraissants utilisés pour le nettoyage.

La plaque de cuisson proposée est avantageusement complétée par les caractéristiques suivantes, prises individuellement ou en l'une quelconque de leurs combinaisons techniquement possibles :
- La zone de cuisson comprend en outre un orifice d'évacuation formé à travers le corps monobloc par emboutissage. La présence d'un orifice d'évacuation permet d'évacuer des graisses ou autres matières liquides de la zone de cuisson pendant la cuisson ou le nettoyage de la plaque. La formation de l'orifice d'évacuation par emboutissage permet de ne pas rallonger le procédé de fabrication de la plaque de cuisson.
- L'orifice d'évacuation comprend en outre une paroi d'évacuation s'étendant à partir de la plaque de cuisson d'un côté opposé à la zone de cuisson. Cela permet d'éviter que des gouttes d'eau ou de graisse ne se répandent sous la plaque de cuisson lors de l'évacuation, et de rediriger ces liquides vers un bac de rétention prévu à cet effet.
- La bordure a, au moins sur une partie de la périphérie de la zone de cuisson, une hauteur supérieure ou égale à 30 mm selon la direction de protrusion. Cela permet de retenir des aliments dans la zone de cuisson et d'éviter des projections à l'extérieur de l'appareil de cuisson.
- La bordure a, le long de la périphérie de la zone de cuisson, une hauteur variable selon la direction de protrusion. Cela permet d'éviter des projections d'aliments en dehors de la plaque de cuisson, tout en préservant une ouverture d'un côté de la zone de cuisson pour permettre une utilisation ergonomique de l'appareil de cuisson comprenant la plaque de cuisson.
- La bordure comprend une portion de rétention de hauteur supérieure ou égale à 40 mm, et une portion d'ouverture de hauteur inférieure ou égale à 30 mm. Cela permet de contenir des matières liquides dans la zone de cuisson tout en ne gênant pas l'utilisateur, et d'éviter la projection d'aliments en dehors de la zone de cuisson et la projection de liquides vers l'utilisateur.
- Le corps monobloc est une tôle en acier inoxydable possédant une épaisseur comprise entre 2 mm et 5 mm, de préférence égale à 3 mm. Cela permet de réduire la quantité de matière et donc l'inertie de la plaque de cuisson lors de la chauffe, ainsi que son coût de fabrication. Cela permet également de faciliter la formation de la plaque de cuisson par emboutissage.
- La plaque de cuisson comprend en outre une portion de liaison s'étendant entre la zone de cuisson et la bordure, la portion de liaison ayant un rayon de courbure dans un plan orthogonal au plan de la zone de cuisson supérieur ou égal à 5 mm. Cela permet de laver plus simplement et rapidement la plaque de cuisson après utilisation, en évitant que des aliments soient coincés dans un renfoncement entre la zone de cuisson et la bordure.
- La direction de protrusion forme un angle supérieur ou égal à 90° avec le plan de la zone de cuisson, de préférence forme un angle égal à 92°. Cette forme évasée permet de simplifier la formation de la plaque de cuisson par emboutissage, et d'augmenter la courbure de la portion de liaison pour une même hauteur de bordure.
- La zone de cuisson a une forme sensiblement rectangulaire, et la bordure comprend quatre portions planes et quatre portions courbes, chaque portion courbe s'étendant entre deux portions planes et ayant un rayon de courbure dans un plan parallèle au plan de la zone de cuisson supérieur ou égal à 20 mm. Cela permet de laver plus simplement et rapidement la plaque de cuisson après utilisation, en évitant que des aliments soient coincés dans un renfoncement au niveau des angles de la zone de cuisson.
- L'acier inoxydable est de l'acier inoxydable ferritique, de préférence un inox 430. Ce matériau présente une faible inertie permettant une chauffe rapide de la plaque de cuisson et donc une meilleure saisie des aliments, et une bonne compatibilité pour un usage alimentaire.

Selon un autre aspect, il est proposé un appareil de cuisson de type plancha comprenant une plaque de cuisson telle que décrite précédemment ; et des moyens de chauffage s'étendant en vis-à-vis de la plaque de cuisson de sorte à chauffer la plaque de cuisson.

L'appareil de cuisson proposé est avantageusement complété par les caractéristiques suivantes, prises individuellement ou en l'une quelconque de leurs combinaisons techniquement possibles :
- La zone de cuisson de la plaque de cuisson comprend un orifice d'évacuation, l'appareil de cuisson comprenant en outre un bac de récupération en communication de liquide avec l'orifice d'évacuation. Comme expliqué précédemment, cela permet d'éliminer rapidement et simplement des excédents de matières grasses ou de liquides de la zone de cuisson, et de nettoyer facilement la plaque de cuisson après utilisation.
- L'appareil de cuisson comprend en outre une plaque de diffusion en acier s'étendant entre la plaque de cuisson et les moyens de chauffage, la plaque de diffusion étant de préférence fixée à la plaque de cuisson. Cela permet d'augmenter l'inertie de la plaque de cuisson et d'améliorer la répartition de la chaleur sur toute la zone de cuisson.
- L'appareil de cuisson comprend en outre un raidisseur configuré pour maintenir fixement la plaque de cuisson et la plaque de diffusion en vis-à-vis des moyens de chauffage. Cela permet d'éviter une déformation de la plaque de cuisson au cours de la chauffe.
- Les moyens de chauffage comprennent deux résistances électriques de puissance supérieure à 2500 W, de préférence égale à 2700 W. Cela permet à la plaque de cuisson d'atteindre des températures très élevées, pour autoriser une grande variété d'utilisations de l'appareil de cuisson.
- L'appareil de cuisson comprend en outre des gougeons soudés sous une face inférieure de la plaque de cuisson, de sorte à permettre une fixation de la plaque de cuisson sur la plaque de diffusion. Cela permet de maintenir fixement la plaque de cuisson sur l'appareil, en réduisant l'espace d'air isolant entre les moyens de chauffage et la plaque de cuisson.

Selon un autre aspect, il est proposé un procédé de fabrication d'une plaque de cuisson comprenant des étapes de :
- découpage d'une plaque d'acier inoxydable de sorte à former un corps monobloc préformé ;
- emboutissage du corps monobloc préformé entre
   une première matrice comprenant une première portion centrale s'étendant dans un premier plan, et une première portion périphérique s'étendant en périphérie de la première portion centrale, et
   une deuxième matrice comprenant une deuxième portion centrale s'étendant dans un deuxième plan parallèle au premier plan, et une deuxième portion périphérique s'étendant en périphérie de la deuxième portion centrale, la deuxième matrice ayant une forme complémentaire à la première matrice;
      de sorte à obtenir un corps monobloc embouti comprenant une zone de cuisson formée entre la première portion centrale et la deuxième portion centrale, et une bordure d'un seul tenant s'étendant sur toute la périphérie de la zone de cuisson selon une direction de protrusion sensiblement orthogonale au plan;
- découpage de la bordure du corps monobloc embouti de sorte à obtenir une bordure plane.

Le procédé de fabrication proposé est avantageusement complété par les caractéristiques suivantes, prises individuellement ou en l'une quelconque de leurs combinaisons techniquement possibles :
- La portion centrale de la deuxième matrice comprend en outre un poinçon configuré pour former un orifice d'évacuation à travers le corps monobloc pendant l'emboutissage. Cela permet de ne pas augmenter la durée du procédé de fabrication tout en bénéficiant des avantages de la présence d'un orifice d'évacuation.
- L'étape de découpage de la bordure du corps monobloc embouti est suivie d'une étape d'ébavurage d'une arête de la bordure. Cela permet d'obtenir des bordures lisses et de réduire le risque de coupure d'un utilisateur.
- Les étapes de découpage sont réalisées par découpe laser. Cette méthode de découpe permet d'obtenir une excellente précision et répétabilité de la fabrication de la plaque de cuisson avec un temps de découpe rapide.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique un appareil de cuisson selon l'invention.
La figure 2 est une vue éclatée de l'appareil de cuisson de la figure 1.
La figure 3 est une vue en perspective arrière de l'appareil de cuisson de la figure 1.
La figure 4 est une vue en coupe de l'appareil de cuisson de la figure 1.
La figure 5 est une vue en perspective d'une plaque de cuisson selon l'invention.
La figure 6 est une vue en perspective d'une face inférieure de la plaque de cuisson de la figure 5.
La figure 7 est un organigramme des étapes d'un procédé de fabrication d'une plaque de cuisson selon l'invention.

Sur l'ensemble des figures, les éléments similaires portent des références identiques.

### DESCRIPTION DETAILLEE DE L'INVENTION

### Appareil de cuisson 100 de type plancha

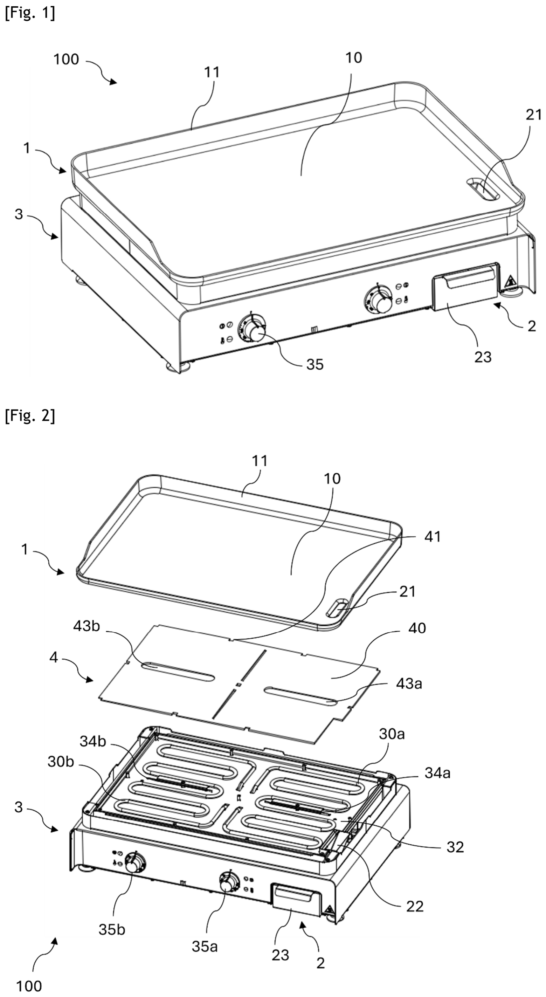

En référence à la figure 1 est présenté un appareil de cuisson 100 de type plancha, qui peut notamment être déplaçable. L'appareil de cuisson 100 est destiné à permettre une cuisson optimale de tout type d'aliments tels que des viandes, des poissons ou encore des poêlées de légumes.

L'appareil de cuisson 100 comprend une plaque de cuisson 1 disposée sur un support 3. Le support 3 comprend des moyens de chauffage configurés pour chauffer la plaque de cuisson 1 en vis-à-vis afin de saisir ou faire griller les aliments disposés sur une zone de cuisson 10 de la plaque de cuisson 1.

Le support 3 comprend des moyens de commande 35 des moyens de chauffage, typiquement sous forme de mollette. Cela permet à l'utilisateur de modifier la puissance des moyens de chauffage et donc la température de la plaque de cuisson 1 et en particulier de la zone de cuisson 10, selon le type de cuisson souhaité.

La zone de cuisson 10 de la plaque de cuisson 1 s'étend dans un plan. La plaque de cuisson 1 comprend également une bordure 11 d'un seul tenant s'étendant du côté de la zone de cuisson 10 sur toute la périphérie de la zone de cuisson. Une telle bordure 11 s'étend selon une direction de protrusion qui est de préférence sensiblement orthogonale au plan. Ainsi, la bordure 11 s'étend tout autour de la zone de cuisson 10 du côté de la plaque de cuisson 1 opposé au support 3, et a une hauteur suffisante pour permettre de contenir des matières liquides, par exemple des sucs ou des matières grasses, présentes dans la zone de cuisson 10.

L'appareil de cuisson 100 comprend de préférence un système d'évacuation 2. Le système d'évacuation 2 permet l'écoulement maitrisé des matières grasses depuis la plaque de cuisson 1 vers un bac de rétention agencé à l'intérieur du support 3. La présence du système d'évacuation 2 permet d'améliorer la qualité de cuisson de l'appareil de cuisson 100 et de faciliter le nettoyage de la plaque de cuisson 1, le système d'évacuation 2 permettant également l'écoulement de produits d'entretien liquides tels que des agents dégraissants utilisés pour nettoyer ou désinfecter la plaque de cuisson 1 après ou avant utilisation de l'appareil de cuisson 100.

La plaque de cuisson 1 comprend de préférence un orifice d'évacuation 21 traversant la zone de cuisson 10 et en communication de liquide avec le bac de rétention. L'orifice d'évacuation 21 est de préférence agencé sur un bord de la zone de cuisson 10, par exemple dans un coin de la plaque de cuisson 1. Cela permet à l'utilisateur de mieux maitriser l'évacuation de liquides issus de la cuisson, par exemple en cas d'excédent de graisse.

Une trappe 23 peut être aménagée dans le support 3 de sorte à pouvoir retirer le bac de rétention après utilisation de l'appareil de cuisson 100 ou après nettoyage, afin de vider le bac de rétention.

Les moyens de chauffage peuvent comprendre un ou plusieurs brûleurs à gaz. Dans ce mode de réalisation, le support 3 comprend au moins un réservoir de gaz, par exemple de butane, en communication avec les brûleurs à gaz. De manière alternative, le support 3 comprend un tuyau d'approvisionnement permettant une communication de gaz entre une bombonne de gaz agencée à l'extérieur de l'appareil de cuisson 100 et les brûleurs à gaz.

En référence à la figure 2, les moyens de chauffage comprennent deux résistances électriques 30a, 30b. L'utilisation de résistances électriques permet une utilisation sécurisée et plus simple de l'appareil de cuisson 100, puisque ces moyens de chauffage peuvent être directement alimentés en électricité par un câble d'alimentation relié à une prise électrique pour être connecté à un réseau électrique domestique. On comprendra que les moyens de chauffage de l'appareil de cuisson proposé ne sont pas limités au mode de réalisation illustré.

De préférence, chaque résistance électrique 30a,30b peut être pilotée individuellement en puissance par l'intermédiaire d'un moyen de commande 35a, 35b dédié. Cela permet d'adapter la température de la plaque de cuisson 1 selon la position des aliments dans la zone de cuisson 10. La zone de cuisson 10 est par exemple séparée en une première zone latérale chauffée à une température élevée par la première résistance électrique 30a en vis-à-vis, et une deuxième zone latérale chauffée à une température inférieure par la deuxième résistance électrique 30b en vis-à-vis. L'utilisateur peut ainsi saisir ou faire griller des aliments dans la première zone latérale, puis maintenir au chaud les aliments saisis dans la deuxième zone latérale en attendant le service.

Chaque résistance électrique peut avoir une puissance supérieure à 2500 W, de préférence égale à 2700 W. Cela permet de porter rapidement la plaque de cuisson 1 et en particulier la zone de cuisson 10 à une température très élevée, typiquement supérieure à 220°C, par exemple égale à 250°C, ou de préférence égale à 300°C. L'utilisateur peut ainsi adapter la température de cuisson sur une large gamme de températures selon le type de cuisson souhaité. De telles résistances électriques 30a, 30b permettent typiquement d'atteindre la température maximale de la zone de cuisson 10 en une faible durée, par exemple avec une durée de chauffe inférieure à 10 min.

Afin de maximiser la chaleur transmise par les moyens de chauffage 30a, 30b à la plaque de cuisson 1, les moyens de chauffage 30a, 30b ne doivent pas être séparés de la plaque de cuisson 1 par un isolant thermique tel que l'air. Afin de permettre d'éviter ou de réduire l'épaisseur d'une couche d'air entre la plaque de cuisson 1 et les moyens de chauffage 30a, 30b, et de maintenir la plaque de cuisson 1 solidaire du support 3, le support 3 comprend des moyens de fixation 34a, 34b permettant d'assembler la plaque de cuisson 1 sur le support 3. La face inférieure de la plaque de cuisson 1 peut comprendre des moyens de fixation complémentaires. Par exemple, des gougeons peuvent être soudés sur la face inférieure de la plaque de cuisson 1 en vis-à-vis des moyens de chauffage 30a, 30b, et insérés dans des orifices prévus dans les moyens de fixation 34a, 34b.

Dans le mode de réalisation illustré, l'appareil de cuisson 100 comprend en outre une plaque de diffusion 4. La plaque de diffusion 4 est agencée entre les moyens de chauffage 30a, 30b et la plaque de cuisson 1. La plaque de diffusion 4 est constituée d'un matériau résistant tel que l'acier. Elle permet de diffuser la puissance thermique émise par les moyens de chauffage 30a, 30b et d'homogénéiser la température de la zone de cuisson 10. Elle forme un réservoir thermique en ce qu'elle permet également d'augmenter l'inertie thermique de l'assemblage, et en particulier de conserver plus longtemps la zone de cuisson 10 à haute température même après l'arrêt des moyens de chauffage 30a, 30b.

La plaque de diffusion 4 est de préférence fixée à la plaque de cuisson 1. Elle permet ainsi de rigidifier l'assemblage de la plaque de cuisson 1 sur le support 3 et d'éviter une déformation de la plaque de cuisson 1 portée à haute température.

Afin de permettre la fixation de la plaque de cuisson 1 avec la plaque de diffusion 4, la plaque de diffusion 4 comprend des orifices de fixation 43a, 43b permettant le passage des moyens de fixation 34a, 34b solidaires du support 3. De préférence, l'appareil de cuisson 100 comprend des gougeons 14 soudés sous la face inférieure de la plaque de cuisson 1 de sorte à permettre la fixation de la plaque de diffusion 4 à la plaque de cuisson 1. Les orifices de fixation 43a, 43b permettant le passage des gougeons de la face inférieure de la plaque de cuisson 1 pour autoriser leur insertion dans les orifices prévus des moyens de fixation 34a, 34b.

La plaque de diffusion 4 a typiquement une forme semblable à la zone de cuisson 10 afin de pouvoir répartir la chaleur emmagasinée sur toute la superficie de la zone de cuisson 10.

La plaque de diffusion 4 a une forme sensiblement rectangulaire. Les côtes de la plaque de diffusion 4 peuvent comprendre des encoches 41 semi-circulaires afin de permettre le passage de moyens de fixation de la plaque de cuisson 1 sur le support 3, par exemple le passage de gougeons soudés sur la face inférieure de la plaque de cuisson 1 et destinés à être insérés dans des orifices correspondant du support 3.

La plaque de diffusion 4 peut également comprendre un orifice ou un espace aménagé en vis-à-vis de l'orifice d'évacuation 21 pour permettre l'évacuation de liquides depuis la plaque de cuisson 1 vers le bac de rétention. Le système d'évacuation 2 comprend de préférence une gouttière 22 (ou goulotte d'évacuation) solidaire du support 3 s'étendant entre la face inférieure de la plaque de cuisson 1, en vis-à-vis de l'orifice d'évacuation 21, et l'intérieur du bac de rétention, afin d'assurer la communication de liquide entre l'orifice d'évacuation 21 et le bac de rétention.

La gouttière 22 peut être fermée comme un tube de section adaptée à la forme de l'orifice d'évacuation 21 ou comprendre seulement des parois latérales. La gouttière 22 peut être formée par une tôle pliée et soudée sur la face inférieure de la plaque de cuisson 1 ou fixée sur le support 3 par soudure ou vissage. La gouttière 22 permet d'éviter des éclaboussures ou des projections à l'intérieur du support 3, et notamment en direction des moyens de chauffage 30a, 30b, qui pourraient causer une inflammation des graisses ou détériorer les composants du support 3.

L'appareil de cuisson 100 comprend de préférence une tôle de plaquage 32 agencée sous les moyens de chauffage 30a, 30b de sorte à former un fond du support 3. La tôle de plaquage 32 peut être vissée ou serrée par les moyens de fixation 34a, 34b afin de réduire ou d'éliminer l'espace résiduel ou la couche d'air entre les moyens de chauffage 30a, 30b électriques et la plaque de cuisson 1 ou la plaque de diffusion 4 éventuelle.

La tôle de plaquage 32 comprend des orifices permettant le passage d'une extrémité des résistances électriques vers les câbles d'alimentations 34a, 34b et la connexion aux moyens de commande 33a, 33b. La tôle de plaquage 32 est par exemple maintenue solidaire de la plaque de cuisson 1 par des écrous vissés sur les gougeons soudés sur la face inférieure de la plaque de cuisson 1.

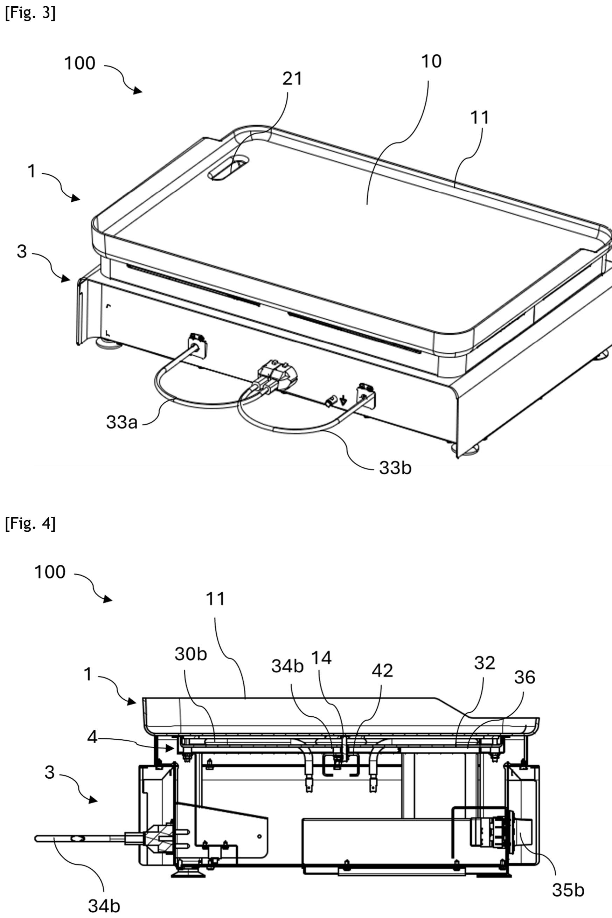

En référence à la figure 3, une face arrière du support 3 comprend de préférence des orifices permettant le passage de câbles d'alimentation 33a, 33b pour l'alimentation électriques des résistances électriques. Selon la puissance électrique de fonctionnement des moyens de chauffage 30a, 30b, un seul câble d'alimentation peut être suffisant. La présence de deux prises permet le branchement simultané des deux câbles d'alimentation 33a, 33b sur deux prises secteur classiques, sans nécessiter une prise triphasée spécifique.

En référence à la figure 4, l'appareil de cuisson 100 comprend de préférence un raidisseur 42 configuré pour maintenir fixement la plaque de cuisson 1 et la plaque de diffusion 4 en vis-à-vis des moyens de chauffage 30a, 30b. Le raidisseur 42 peut s'étendre sensiblement sur toute la longueur de la zone de cuisson 10, dans une région centrale de la plaque de cuisson 1. Le raidisseur 42 peut être compatible avec les moyens de fixation 34a, 34b. Ici, le raidisseur 42 est maintenu fixement entre le support 3 et la plaque de cuisson 1 grâce aux gougeons 14 soudés sur la face inférieure de la plaque de cuisson 1 et inséré dans un orifice des moyens de fixation 34a, 34b.

Le raidisseur 42 peut avoir une forme de barre rectiligne ou d'oméga s'étendant en une position centrale sous la face inférieure de la plaque de cuisson 1.

De préférence, l'appareil de cuisson 100 comprend en outre une tôle d'écran 36 agencée en dessous de la tôle de plaquage 32 et des moyens de chauffage 30a, 30b. La tôle d'écran 36 permet de protéger les composants électroniques agencés dans le support 3, en particulier des composants des moyens de commande 33a, 33b et des câbles d'alimentation 34a,34b agencés sous les moyens de chauffage 30a, 30b, à l'intérieur du support 3, des rayonnements des résistances électriques, qui pourraient entrainer une surchauffe des composants et un dysfonctionnement de l'appareil de cuisson 100.

### Plaque de cuisson 1

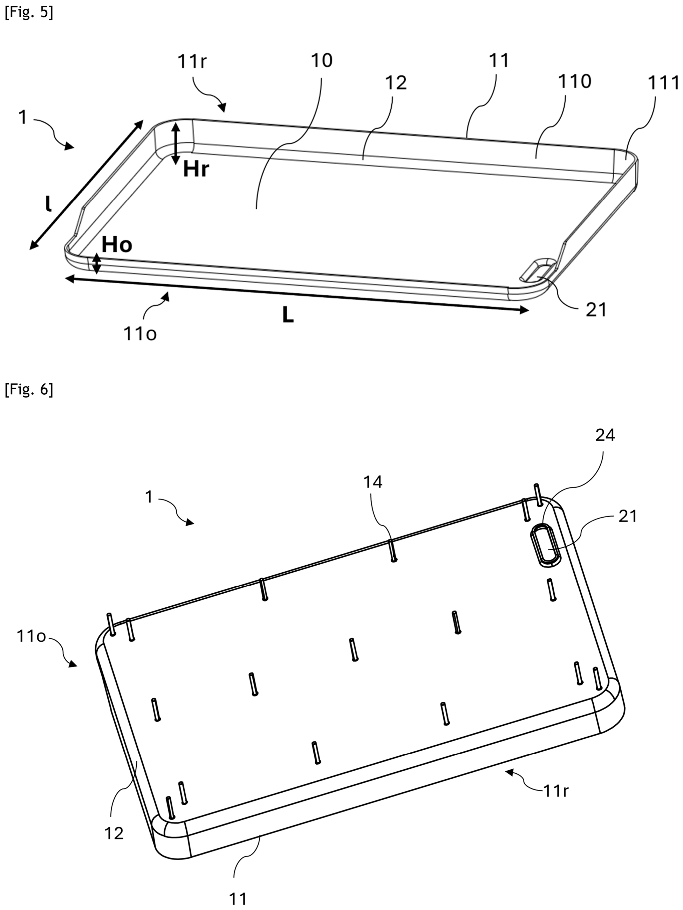

Les caractéristiques structurelles de la plaque de cuisson 1 vont maintenant être décrites plus en détail, en référence aux figures 5 et 6.

Comme expliqué précédemment, la plaque de cuisson 1 comprend la zone de cuisson 10 s'étendant dans un plan et la bordure 11 d'un seul tenant s'étendant du côté de la zone de cuisson 10 sur toute la périphérie de la zone de cuisson 10. Un tel agencement de la plaque de cuisson 10 est réalisable car la plaque de cuisson 10 est formée par emboutissage d'un unique corps monobloc.

Dans le mode de réalisation illustré, la plaque de cuisson 1 a une forme sensiblement rectangulaire, avec deux côtés principaux s'étendant parallèlement sur une longueur L et deux côtés secondaires s'étendant parallèlement sur une largeur l dans le plan de la zone de cuisson 10. On comprendra que la plaque de cuisson 1 peut avoir une forme sensiblement carrée ou circulaire, selon l'usage de l'appareil de cuisson 100 et la forme du support 3 associé. La longueur L est par exemple comprise entre 60 cm et 80 m, typiquement égale à 67 cm environ, tandis que la largeur l est par exemple comprise entre 40 cm et 60 cm, typiquement égale à 47 cm environ.

La bordure 11 comprend quatre portions planes et quatre portions courbes au niveau des angles de la zone de cuisson 10, c'est-à-dire que chaque portion courbe s'étend entre deux portions planes. La présence des portions courbes permet une continuité de surface entre chaque côté de la plaque de cuisson 1, et d'éviter la présence de creux difficilement accessibles lors du nettoyage de la zone de cuisson 10.

De préférence, chaque portion courbe de la bordure a un rayon de courbure dans un plan parallèle au plan de la zone de cuisson 10 supérieur ou égal à 20 mm, par exemple égal à 40 mm. Ainsi, le nettoyage de la plaque de cuisson 1 peut être réalisé simplement et rapidement après utilisation, sans nécessiter l'usage d'objets contendants pour racler des dépôts de nourriture éventuels retenus au niveau des angles.

La bordure 11 peut avoir le long de la périphérie de la zone de cuisson 10, une hauteur constante. Typiquement, la hauteur peut être supérieure ou égale à 30 mm selon la direction de protrusion.

La bordure 11 a, dans le mode de réalisation illustré, une hauteur variable selon la direction de protrusion le long de la périphérie de la zone de cuisson 10. Par exemple, la bordure 11 comprend une portion de rétention 11r s'étendant selon la direction de protrusion selon une première hauteur Hr constante, et une portion d'ouverture 11o s'étendant selon la direction de protrusion selon une deuxième hauteur Ho inférieure à la première hauteur Hr constante. La transition entre la portion de rétention 11r et la portion d'ouverture 11o est réalisée par une portion de jonction de hauteur h variable entre la première hauteur Hr et la deuxième hauteur Ho, afin d'assurer la continuité de la bordure 11.

Dans le mode de réalisation illustré, la portion de rétention 11r s'étend selon un côté principal et selon la majorité de la largeur l des deux côtés secondaires, et la portion d'ouverture 11o s'étend sur l'autre côté principal et sur une faible portion des deux côtés secondaires. La portion d'ouverture 11o est destinée à faire face à l'utilisateur lorsque l'appareil de cuisson 100 est utilisé. Selon la position des moyens de commande 35 sur le support 3, la portion d'ouverture 11o peut également être aménagée sur un côté secondaire de la plaque de cuisson 1. Cela permet à l'utilisateur d'utiliser l'appareil de cuisson 100 dans la profondeur.

L'orifice d'évacuation 21 peut être agencé à proximité de la portion d'ouverture 11o, afin de permettre à l'utilisateur un accès simple au bac de rétention, et de faciliter l'évacuation des graisses excédentaires au cours de la cuisson d'aliments.

De préférence, la portion de rétention 11r a une première hauteur Hr supérieure à 40 mm, par exemple environ égale à 42 mm, voire supérieure à 45 mm. Cela permet avantageusement d'éviter que des aliments soient éjectés involontairement hors de la zone de cuisson 10, et également de rediriger des aliments vers la zone de cuisson 10, par exemple lorsque l'appareil de cuisson 100 est utilisé pour cuisiner une poêlée de légumes ou des nouilles sautées.

La portion d'ouverture 11o a une deuxième hauteur Ho qui peut être inférieure ou égale à 20 mm, ou encore inférieure ou égale à 30 mm, mais de préférence supérieure à 10 mm, typiquement égale à environ 18 mm. Cela permet de retenir des matières liquides sur la zone de cuisson 10 et d'éviter des projections en direction de l'utilisateur, tout en permettant un accès facile et confortable à la zone de cuisson 10.

L'agencement particulier de la plaque de cuisson 1 ayant une bordure 11 formée d'un seul tenant, et avec une bordure 11 suffisamment haute, permet comme indiqué précédemment, d'éviter les projections en dehors de la zone de cuisson 10, sans avoir à utiliser des éléments de protection additionnels qui seraient rapportés au moins en partie autour de la plaque de cuisson 1. Cela simplifie grandement l'utilisation de la plaque de cuisson 1.

La plaque de cuisson 1 est formée par emboutissage d'un corps monobloc en acier inoxydable. Cela permet de simplifier le procédé de fabrication de la plaque de cuisson 1, comme il sera détaillé par la suite, et d'obtenir les caractéristiques structurelles précédemment décrites.

L'utilisation d'une zone de cuisson 10 en inox permet la cuisson des aliments à haute température tout en limitant le recours aux matières grasses, en autorisant une montée en température particulièrement rapide et une bonne répartition de la chaleur dans la zone de cuisson 10. La plaque de cuisson 1 en acier inoxydable présente une surface lisse au niveau de la zone de cuisson 10 facilitant le nettoyage et assurant une bonne hygiène de l'appareil de cuisson 100.

De préférence, l'acier inoxydable est de l'acier inoxydable ferritique, c'est-à-dire comprenant de la ferrite et une forte proportion de chrome (entre 10,5% et 27%), ainsi qu'une faible proportion de carbone avec très peu ou pas de nickel. Ce matériau est plus dur et moins malléable que l'acier inoxydable austénitique, mais se déforme moins lors de la chauffe. Il présente une ductilité, une résistance à la corrosion, à l'oxydation, à la pression et à la fissuration suffisante pour l'emboutissage, avec un coût inférieur à l'acier austénitique. L'acier inoxydable utilisé est par exemple un inox 430, comprenant 17 % de chrome. Ce matériau est particulièrement résistant à la corrosion par les acides nitriques, et de nombreux acides organiques et alimentaires.

Le corps monobloc est une tôle en acier inoxydable possédant une épaisseur comprise entre 2 mm et 5 mm, de préférence égale à 3 mm. L'utilisation d'une tôle de faible épaisseur permet de faciliter la mise en forme du corps monobloc lors de l'emboutissage et de réduire la quantité de matière constituant la plaque de cuisson 1. La présence du raidisseur 42 et de la plaque de diffusion 4 permettent d'éviter une déformation de la plaque de cuisson 1 lors de la chauffe malgré sa faible épaisseur.

La formation de la plaque de cuisson 1 par emboutissage permet d'avoir une continuité de surface entre la zone de cuisson 10 et la bordure 11. Plus précisément, la plaque de cuisson comprend une portion de liaison 12 s'étendant entre la zone de cuisson 10 et la bordure 11, c'est-à-dire selon toute la périphérie de la zone de cuisson 10. La portion de liaison 12 a un rayon de courbure dans un plan orthogonal à la zone de cuisson 10 supérieur ou égal à 5 mm, par exemple égal à 10 mm. Ainsi, l'utilisateur peut simplement nettoyer la plaque de cuisson 1 après utilisation avec une éponge, sans devoir racler des parties anguleuses. Cela permet d'obtenir un appareil de cuisson 100 plus hygiénique.

De préférence, la direction de protrusion forme un angle supérieur ou égal à 90° avec le plan de la zone de cuisson 10, typiquement forme un angle égal à 92°. Cela contribue également de faciliter l'accès à la portion de liaison 12 lors du nettoyage. La forme évasée de la plaque de cuisson 1 permet de faciliter l'extraction de la plaque de cuisson 1 lors de l'emboutissage, en réduisant la friction entre le corps monobloc déformé et la matrice utilisée pour déformer le corps monobloc lors de l'étape d'emboutissage décrite par la suite. L'élasticité naturelle de l'acier inoxydable contribue également, par retour élastique sur la matière après l'emboutissage, à augmenter l'angle formé entre la bordure 11 et le plan de la zone de cuisson 10 d'un angle supérieur à 90°.

L'orifice d'évacuation 21 peut être formé à travers le corps monobloc par emboutissage ou par découpe de la plaque de cuisson 1 après formation de la plaque de cuisson 1 par emboutissage. L'orifice d'évacuation 21 est avantageusement formé au cours de la même opération d'emboutissage que la plaque de cuisson 1. Cela permet de simplifier le procédé de fabrication de la plaque de cuisson 1 et garantit un bon positionnement de l'orifice d'évacuation 21 sur la zone de cuisson 10.

En référence à la figure 6, l'orifice d'évacuation 21 comprend en outre une paroi d'évacuation 24 s'étendant à partir de la plaque de cuisson 1 d'un côté opposé à la zone de cuisson 10, c'est-à-dire à partir de la face inférieure de la plaque de cuisson 1. La paroi d'évacuation 24 forme une lèvre recouvrant l'extrémité supérieure de la gouttière 22 pour l'évacuation des graisses vers le bac de rétention. La paroi d'évacuation 24 forme un coupe gouttes qui permet d'éviter que l'eau ou les autres matières liquides restent collées sous la plaque de cuisson 1 pendant le nettoyage, et soient correctement évacuées.

On comprendra que la plaque de cuisson 1 et l'appareil de cuisson 100 est décrit dans un mode de réalisation particulier, mais que l'invention ne se limite pas à une plaque de cuisson 1 ou à un appareil de cuisson 100 comprenant toutes les caractéristiques représentées. En particulier, la plaque de cuisson 1 peut ne pas comprendre d'orifice d'évacuation 21, ou présenter une géométrie différente.

### Procédé de fabrication de la plaque de cuisson 1

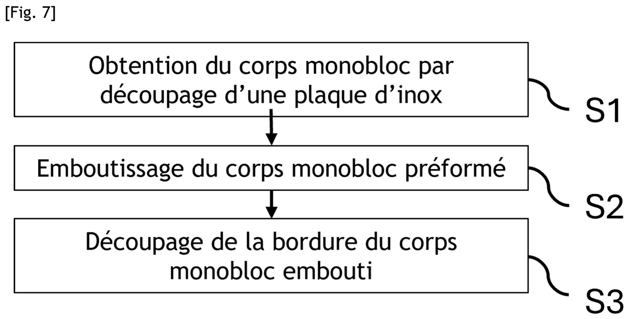

Un procédé de fabrication de la plaque de cuisson 1 va maintenant être décrit, en référence à la figure 7.

Au cours d'une première étape S1, une plaque ou tôle d'acier inoxydable est découpée afin de former un corps monobloc préformé. Les dimensions du corps monobloc préformé sont supérieures à celles de la zone de cuisson 10 et de la bordure 11 de la future plaque de cuisson 1. Typiquement, le corps monobloc préformé a une forme sensiblement rectangulaire de longueur supérieure à la somme de la longueur L de la zone de cuisson 10 et de la première hauteur Hr, et une largeur supérieure à la somme de la largueur l de la zone de cuisson 10 et de la première hauteur Hr.

De préférence, le découpage est réalisé par découpe laser bidimensionnelle le long d'un profil prédéterminé. Le corps monobloc préformé est avantageusement recouvert d'un film de protection, par exemple un film en PVC, afin de protéger la surface du corps monobloc préformé lors de l'emboutissage.

Au cours d'une deuxième étape S2, le corps monobloc préformé est embouti, c'est-à-dire pressé, entre une première matrice et une deuxième matrice de sorte à obtenir un corps monobloc embouti. La première matrice comprend une première portion centrale s'étendant dans un premier plan, et une première portion périphérique s'étendant en périphérie de la première portion centrale, et la deuxième matrice comprend une deuxième portion centrale s'étendant dans un deuxième plan parallèle au premier plan, et une deuxième portion périphérique s'étendant en périphérie de la deuxième portion centrale. Ainsi, le corps monobloc préformé par la découpe est déformé par pression entre la première matrice et la deuxième matrice ayant une forme complémentaire à la première matrice.

Le corps monobloc embouti ainsi obtenu comprend une zone de cuisson 10 formée entre la première portion centrale et la deuxième portion centrale, et une bordure d'un seul tenant s'étendant sur toute la périphérie de la zone de cuisson 10 selon une direction de protrusion sensiblement orthogonale au plan.

De préférence, la bordure d'un seul tenant comprend une extrémité recourbée, au niveau de laquelle le corps monobloc est maintenu sous pression entre la première matrice et la deuxième matrice, s'étendant dans un plan parallèle au plan de la zone de cuisson et orientée vers l'extérieur de la zone de cuisson 10, et non en vis-à-vis de la zone de cuisson 10. L'extrémité recourbée forme une lèvre facilitant l'extraction du corps monobloc embouti par une pince adéquate de la deuxième matrice ou de la première matrice, en réduisant les risque de déformation de la zone de cuisson 10 plane et d'éviter un arrachement de matière lorsque le corps monobloc embouti est extrait de la matrice ou une usure importante des matrices.

De préférence, la portion centrale de la deuxième matrice comprend en outre un poinçon configuré pour former l'orifice d'évacuation 21 à travers le corps monobloc pendant l'emboutissage. La première matrice comprend alors une encoche de forme complémentaire au poinçon. Comme expliqué précédemment, cela permet de former la plaque de cuisson 1 illustrée par une seule opération d'emboutissage et de réduire la durée de fabrication de l'appareil de cuisson 100. L'emboutissage permet également la formation de la paroi d'évacuation 24 en forme de bec, par découpage de la portion du corps monobloc déformée par le poinçon. Typiquement, l'orifice d'évacuation 21 est prédécoupé avant l'emboutissage. L'outil d'emboutissage, comprenant la première matrice et la deuxième matrice, forme les rebords de l'orifice d'évacuation 21, c'est-à-dire la paroi d'évacuation 24.

Au cours d'une étape S3, la bordure du corps monobloc embouti est découpée de sorte à obtenir une bordure plane. L'extrémité recourbée formant une lèvre est ainsi découpée. La présence de l'extrémité recourbée permet ainsi de garantir un bon état de surface de la plaque de cuisson 1 finale qui n'est pas déformée lors de l'extraction après emboutissage. La surface de la plaque de cuisson 1 ne présente avantageusement pas de marbrures.

Le découpage peut être réalisé par découpe 3D laser. Le découpage permet également de former la bordure 11 présentant une hauteur variable sur la périphérie de la zone de cuisson 10. En particulier, la portion de rétention 11r et la portion d'ouverture 11o, ainsi que la portion de jonction éventuelle peut être formée par découpage du corps monobloc embouti.

De préférence, l'étape de découpage S3 de la bordure du corps monobloc embouti est suivie par une étape d'usinage, par exemple un ébavurage, d'une arête de la bordure 11. Cela permet d'éliminer les arêtes vives dues au découpage lors de l'étape S3, notamment le long de la bordure 11, et ainsi d'éviter que la bordure 11 présente des arêtes tranchantes qui risqueraient de couper l'utilisateur.

La plaque de cuisson 1 obtenue à l'issue de ce procédé de fabrication peut être assemblée avec les autres composants décrits précédemment pour obtenir l'appareil de cuisson 100 de type plancha.

## Revendications

1. Plaque de cuisson (1) pour plancha formée par emboutissage d'un corps monobloc en acier inoxydable, la plaque de cuisson (1) comprenant une zone de cuisson (10) s'étendant dans un plan, et une bordure (11) d'un seul tenant s'étendant du côté de la zone de cuisson (10) sur toute la périphérie de la zone de cuisson (10) selon une direction de protrusion sensiblement orthogonale au plan, la plaque de cuisson (1) comprenant en outre une portion de liaison (12) s'étendant entre la zone de cuisson (10) et la bordure (11), la portion de liaison (12) ayant un rayon de courbure dans un plan orthogonal au plan de la zone de cuisson supérieur ou égal à 5 mm.

2. Plaque de cuisson selon la revendication 1, dans laquelle la zone de cuisson (10) comprend en outre un orifice d'évacuation (21) formé à travers le corps monobloc par emboutissage.

3. Plaque de cuisson selon la revendication 2, dans laquelle l'orifice d'évacuation (21) comprend en outre une paroi d'évacuation (24) s'étendant à partir de la plaque de cuisson (1) d'un côté opposé à la zone de cuisson (10).

4. Plaque de cuisson selon l'une quelconque des revendications 1 à 3, dans laquelle la bordure (11) a, au moins sur une partie de la périphérie de la zone de cuisson (10), une hauteur supérieure ou égale à 30 mm selon la direction de protrusion.

5. Plaque de cuisson selon l'une quelconque des revendications 1 à 4, dans laquelle la bordure (11) a, le long de la périphérie de la zone de cuisson (10), une hauteur variable selon la direction de protrusion.

6. Plaque de cuisson selon la revendication 5, dans laquelle la bordure comprend une portion de rétention (11r) de hauteur supérieure ou égale à 40 mm, et une portion d'ouverture (11o) de hauteur inférieure à 30 mm, de sorte à contenir des matières liquides dans la zone de cuisson (10).

7. Plaque de cuisson selon l'une quelconque des revendications 1 à 6, dans laquelle le corps monobloc est une tôle en acier inoxydable possédant une épaisseur comprise entre 2 mm et 5 mm, de préférence égale à 3 mm.

8. Plaque de cuisson selon l'une quelconque des revendications 1 à 7, dans laquelle la direction de protrusion forme un angle supérieur ou égal à 90° avec le plan de la zone de cuisson (10), de préférence forme un angle égal à 92°.

9. Appareil de cuisson (100) de type plancha comprenant
une plaque de cuisson (1) selon l'une quelconque des revendications 1 à 8 ; et
des moyens de chauffage (30a, 30b) s'étendant en vis-à-vis de la plaque de cuisson (1) de sorte à chauffer la plaque de cuisson (1).

10. Appareil de cuisson de type plancha selon la revendication 9, dans lequel la zone de cuisson (10) de la plaque de cuisson (1) comprend un orifice d'évacuation (21), l'appareil de cuisson (100) comprenant en outre un bac de récupération en communication de liquide avec l'orifice d'évacuation (21).

11. Appareil de cuisson de type plancha selon l'une des revendications 9 et 10, comprenant en outre une plaque de diffusion (4) en acier s'étendant entre la plaque de cuisson (1) et les moyens de chauffage (30a, 30b), la plaque de diffusion (4) étant de préférence fixée à la plaque de cuisson (1).

12. Procédé de fabrication d'une plaque de cuisson selon l'une quelconque des revendications précédentes comprenant des étapes de :
- découpage (S1) d'une plaque d'acier inoxydable de sorte à former un corps monobloc préformé ;
- emboutissage (S2) du corps monobloc préformé entre
une première matrice comprenant une première portion centrale s'étendant dans un premier plan, et une première portion périphérique s'étendant en périphérie de la première portion centrale, et
une deuxième matrice comprenant une deuxième portion centrale s'étendant dans un deuxième plan parallèle au premier plan, et une deuxième portion périphérique s'étendant en périphérie de la deuxième portion centrale, la deuxième matrice ayant une forme complémentaire à la première matrice;
de sorte à obtenir un corps monobloc embouti comprenant une zone de cuisson formée entre la première portion centrale et la deuxième portion centrale, et une bordure d'un seul tenant s'étendant sur toute la périphérie de la zone de cuisson selon une direction de protrusion sensiblement orthogonale au plan;
- découpage (S3) de la bordure du corps monobloc embouti de sorte à obtenir une bordure plane.

13. Procédé de fabrication d'une plaque de cuisson selon la revendication 12, dans lequel la portion centrale de la deuxième matrice comprend en outre un poinçon configuré pour former un orifice d'évacuation à travers le corps monobloc pendant l'emboutissage.

14. Procédé de fabrication d'une plaque de cuisson selon l'une des revendications 12 et 13, dans lequel l'étape de découpage (S3) de la bordure du corps monobloc embouti est suivie d'une étape d'ébavurage d'une arête de la bordure.

15. Procédé de fabrication d'une plaque de cuisson selon l'une des revendications 12 à 14, dans lequel les étapes de découpage sont réalisées par découpe laser.
